# EUROPÄISCHE PATENTSCHRIFT

(11) **EP 0 502 310 B1**
(45) Veröffentlichungstag und Bekanntmachung des Hinweises auf die Patenterteilung: **05.03.1997**
(21) Anmeldenummer: 92101445.2
(22) Anmeldetag: 29.01.1992
(51) Int. Cl.: B60G 9/00

(54) **Luftgefederte, lenkbare Räder tragende Achse eines Kraftfahrzeuges, insbesondere Niederflurbus**
Axle with steered wheels and pneumatic suspension for a motor vehicle, especially for a low-floor bus
Essieu à roues directrices et à suspension pneumatique pour véhicule à moteur, en particulier pour autobus surbaissé

(30) Priorität: 07.03.1991 DE 4107303
(43) Veröffentlichungstag der Anmeldung: 09.09.1992
(73) Patentinhaber: MAN Nutzfahrzeuge Aktiengesellschaft, 80976 München (DE)
(72) Erfinder: Fuchs, Dietrich, Dr.-Ing., W-8047 Karlsfeld (DE)

(56) Entgegenhaltungen:
- EP-A- 0 318 683
- AT-B- 350 404
- GB-A- 1 053 198
- GB-A- 1 207 738

## Beschreibung

Die Erfindung betrifft eine luftgefederte, lenkbare Räder tragende Achse eines Kraftfahrzeuges, insbesondere Niederflurbusses, mit Merkmalen, wie im Oberbegriff des Anspruchs 1 angegeben.

Die Erfindung geht aus von der EP-A-318 683. Hieraus ist eine luftgefederte, lenkbare Räder tragende Achse eines Kraftfahrzeuges bekannt, mit einem Achskörper, der deswegen praktisch torsionssteif ist, um unkontrollierte Schwingungen zu vermeiden, die beispielsweise durch Bremsungen auf Fahrbahnen mit beidseitig unterschiedlichen Reibwerten initiierbar sind. Die Tatsache der torsionssteifen Ausbildung des Achskörpers ergibt sich auch daraus, daß der momentenabstützende Lenker mit dem Achskörper eine feste Einheit bildet und die notwendigen Freiheitsgrade in dessen fliegende Aufhängung verlagert sind.

Im übrigen kommt mit diesem torsionssteifen Achskörper bei der bekannten Lösung eine Achsführung zur Anwendung, mit
a) je Achsseite einem am Achskörper angelenkten, diesen vorn überragenden Längslenker zur Längsführung der Achse, und
b) einem am Achskörper lagefixiert befestigten, diesen hinten überragenden und nur zur Momentenabstützung der Achse dienend ausgebildeten Lenker, und
c) einer vorderen, rahmenfesten, seitenführenden Anlenkung je vorderem Längslenker, und
d) einer hinteren, zur reinen Vertikalkraftaufnahme aus der Momentenabstützung dienenden fliegenden Aufhängung des momentenabstützenden Lenkers, und
e) einem Diagonal- oder Querverbindungsstab zwischen beiden vorderen Längslenkern zur Querführung der Achse.

Die achsführenden Organe sind dabei - in Fahrtrichtung vorwärts gesehen - gezogen vor dem torsionssteifen Achskörper, angelenkt an diesem und dem Fahrzeugrahmen und von der Momentenabstützung getrennt, angeordnet. Zur Momentenabstützung ist eine einzige, als Gabel oder gerader Balken ausgebildete fliegende Achsschwinge vorgesehen, die - in Fahrtrichtung vorwärts gesehen - geschoben hinter dem torsionssteifen Achskörper einenendes fest an diesem angeordnet und andernendes am Fahrzeugrahmen aufgehängt ist, und zwar über ein Distanzorgan, das in vertikaler Richtung weitestgehend steif ist, ansonsten jedoch begrenzt Längs-, Quer- und Kippbewegungen der Achsschwinge zuläßt Diese bekannte Achsführung baut vergleichsweise flach, vermeidet in allen Fahr- sowie Einfederungssituationen eine kritische Veränderung des Achsnachlaufes und wirkt bei Abbremsung des Fahrzeuges nicht zusätzlich einfedernd. Es wird mit dieser bekannten Achsführung daher ein ganz bestimmtes Fahrverhalten im Normalbetrieb und in bestimmten Fahrsituationen erzielt. Ein Kriterium für dieses Fahrverhalten ist auch jenes, daß die bekannte Achsführung dem praktisch verwindungssteifen Achskörper zugeordnet ist, denn die entsprechenden Freiheitsgrade sind vom Achskörper weg in die Aufhängung der Achsschwinge verlegt.

Diese bekannte Lösung hat jedoch den Nachteil, daß im Bereich der momentenabstützenden Schwinge der Einbau eines Motors erheblich erschwert oder gar unmöglich ist. Außerdem erfordert diese bekannte Lösung in jedem Fall eine Quertraverse zwischen den Rahmen-Längsträgern des Fahrzeuges für die Anbringung des oberen Lagers der fliegenden Abstützung der momentenabstützenden Schwinge.

Es ist demgegenüber daher Aufgabe der Erfindung, für eine luftgefederte, lenkbare Räder tragende Achse eines Kraftfahrzeuges, insbesondere Niederflurbusses, eine nach wie vor flach bauende Achsführung zu finden, mit der eine verbesserte Bremsmomentenabstützung bei Einfederung, nach wie vor ein Nachlaufabbau im Bremsfall und ein kurvenäußerer Nachlaufabbau bei Seitenneigung vermeidbar ist und die überdies auch den Raum für den Einbau eines Motors frei läßt.

Diese Aufgabe ist erfindungsgemäß durch eine luftgefederte, lenkbare Rädertragende Achse mit den im Kennzeichen des Anspruches 1 angegebenen Kombinationsmerkmalen, mithin durch die Kombination der Verwendung eines torsionsweichen Achskörpers mit einer speziellen Achsführung, gelöst.

Vorteilhafte Ausgestaltungen dieser Lösung sind in den Unteransprüchen gekennzeichnet.

Bei der erfindungsgemäßen Achsführung ist wegen der festen vorderen Befestigung der momentenabstützenden hinteren Lenker am Achskörper und der definierten hinteren, nur längsweichen Anlenkung dieser Lenker am Rahmen ein torsionsweicher Achskörper zwingend erforderlich, um ein einseitiges Einfedern des Fahrzeugaufbaus überhaupt zu ermöglichen. Dabei wird der torsionsweiche Achskörper zwischen den Einspannpunkten der momentenabstützenden Lenker verschränkt. Die Anordnung und Ausbildung der momentenabstützenden Lenker als möglichst unelastische Biegeträger, z. B. durch ein hochgestelltes Federblatt, parallel und vergleichsweise weit auseinander, erlaubt die Anordnung eines Motors in deren Bereich und dazwischen. Außerdem wird durch die gezielte Torsionselastizität des Achskörpermittelteils und wegen der seitengeführten Befestigung/Anlenkung der hinteren Enden der momentenabstützenden Lenker ein zusätzlicher Stabilisatoreffekt erzielt. Schließlich ist mit der erfindungsgemäßen Lösung eine sehr flach bauende Achsführung realisierbar, mit der im Fahrbetrieb auch eine einfederungsreduzierende Bremsmomentenabstützung, eine Nachlaufvergrößerung bei Parallel-Einfederung und kurvenäußere Nachlaufvergrößerung bei Seitenneigung erzielbar ist.

Die gewollte bzw. aufgrund der Achsführungskonstruktion in Kauf zu nehmende Zwangstorsion des Achskörpers kann durch entsprechende Ausgestaltung und Bemessung desselben eingestellt werden.

Nachstehend ist die erfindungsgemäße Achse anhand eines in der Zeichnung dargestellten Ausführungsbeispieles noch näher erläutert.

In der Zeichnung zeigen:

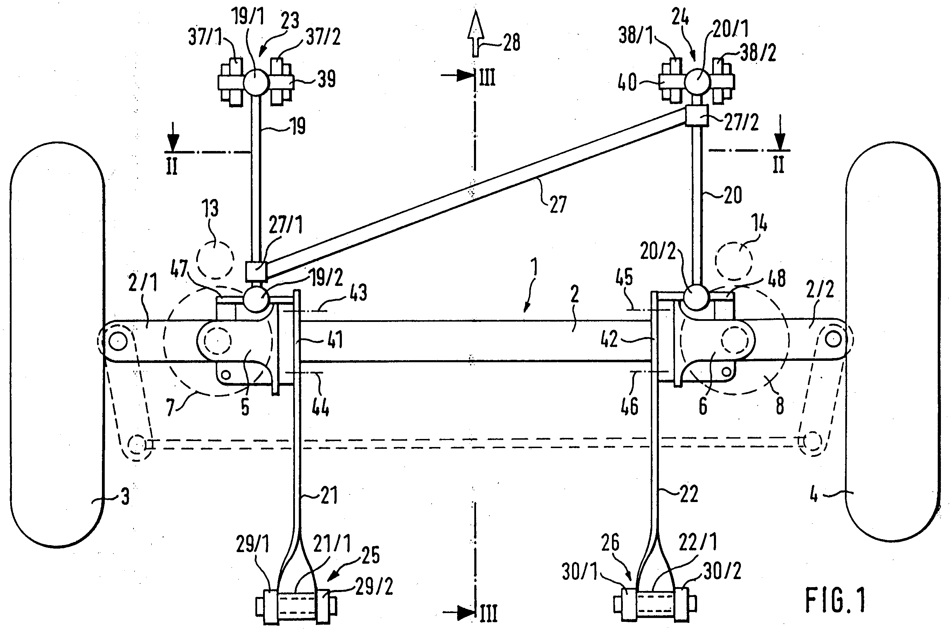

- Fig. 1: eine Draufsicht auf die schematisiert dargestellte Achse, wobei aus Gründen der Übersichtlichkeit auf die Darstellung des Fahrzeugrahmens verzichtet wurde,

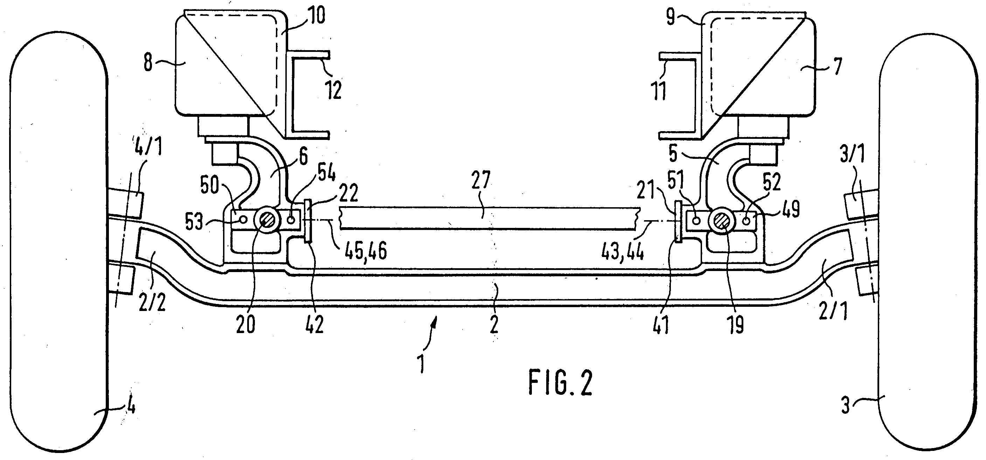

- Fig. 2: eine Vorderansicht der Achse in Verbindung mit einem Querschnitt durch die Achsführung gemäß Fig. 1 entlang der Linie II-II, und
- Fig. 3: einen Längsschnitt durch die Achse gemäß Fig. 1 entlang der Linie III-III.

Die insgesamt mit 1 bezeichnete Achse des Kraftfahrzeuges, insbesondere Niederflurbusses, besteht aus einem torsionsweichen Achskörper 2, an dessen hochgekröpften, faustartigen Enden 2/1, 2/2 lenkbare Räder 3, 4 mit ihren Radträgern 3/1, 4/1 angelenkt sind. Der Achskörper 2 weist oben zwei Lagerböcke 5, 6 auf, an deren oberem Plateau je eine Luftfeder 7, 8 befestigt ist. Jede der Luftfedern 7, 8 ist oben an einem Halter 9, 10 abgestützt, der außen an einem der beiden Rahmenlängsträger 11, 12 des Kraftfahrzeugs befestigt ist. In ähnlicher Weise wie die beiden Luftfedern 7, 8 sind jeweils benachbart zu diesen Stoßdämpfer 13, 14 zwischen Achskörper 2 und Rahmenlängsträger 11 bzw. 12 angeordnet, wobei zur Befestigung und Abstützung der Stoßdämpfer 13, 14 unten jeweils seitlich nach vorn am zugehörigen Lagerbock 5, 6 abragende Stützarme 15, 16 und oben jeweils am Halter 9, 10 nach vorn auskragende Stützarme 17, 18 vorgesehen sind.

Zur Führung dieser Achse 1 sind in Kombination mit besagtem torsionsweichen Achskörper 2 folgende Bauteile vorgesehen:
a) je Achsseite ein am Achskörper 2 angeschlossener, diesen vorn überragender Längslenker 19, 20 zur Längsführung der Achse 1, und
b) je Achsseite ein am Achskörper 2 angeschlossener, diesen hinten überragender Lenker 21, 22 nur zur Momentenabstützung der Achse 1, und
c) eine vordere, rahmenfeste, seitenführende Anlenkung 23, 24 je Längslenker 19, 20, und
d) eine hintere, längsweiche und zur reinen Vertikalkraftaufnahme aus der Momentabstützung dienende rahmenseitige Anlenkung 25, 26 je momentenabstutzendem Lenker 21, 22 und
e) ein Diagonal- oder Querverbindungsstab 27 zwischen beiden Längslenkern 19, 20 zur Querführung der Achse 1.

Im Hinblick auf eine flachste Bauweise sind - wie aus der Zeichnung ersichtlich - beide Längslenker 19, 20, der Diagonal- bzw. Querverbindungsstab 27 und beide momentenabstützende Lenker 21, 22 vorzugsweise in der selben Fahrzeugquerebene angeordnet. Es ist aber auch möglich, die Längslenker 19, 20 in einer anderen, über oder unter jener die momentenabstutzenden Lenker 21, 22 beinhaltenden Fahrzeugquerebene anzuordnen.

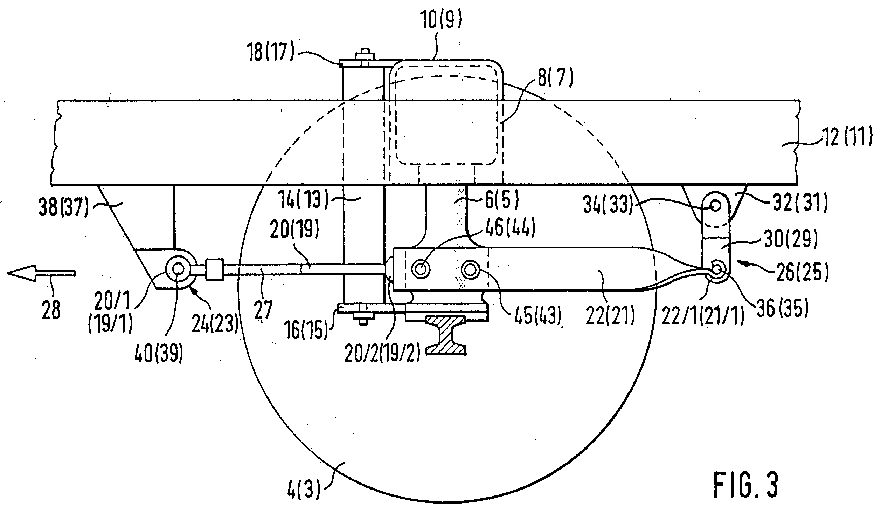

Nachstehend ist auf Details der Achsführung naher eingegangen. Hinsichtlich der Darstellung von Fig. 3 sei darauf hingewiesen, daß die dort in Klammern eingetragenen Bezugszeichen die gleichen, aber auf der gegenüberliegenden Achsseite angeordneten Bauteile betreffen.

Die momentenabstützenden Lenker 21, 22 sind vorzugsweise jeweils durch ein Hoch-Längsfederblatt gebildet, das aus wenigstens einem Stahlfederblatt oder einem faserverstärkten Kunststofflaminat besteht und an seinem (aus Sicht der Fahrtrichtung vorwärts gemäß Pfeil 28 betrachtet) hinteren Ende um 90° in Querrichtung verschränkt sowie dort mit einem durch Rollen oder Biegen erzeugten Lagerauge 21/1, 22/1 für, seine hintere Befestigung versehen ist. Die hintere, längsweiche (nur in Fahrzeuglängsrichtung nachgiebige) und vertikalkraftaufnehmende Anlenkung 25, 26 für jeden der beiden Lenker 21, 22 ist vorzugsweise über eine am zugehörigen Rahmenlängsträger 11 bzw. 12 des Fahrzeugs hängend angelenkte Schwinge 29, 30 bewerkstelligt. Hierfür ist am betreffenden Rahmenlängsträger 11 bzw. 12 fest (angeschraubt oder angeschweißt) ein nach unten abragender Lagerbock 31, 32 angeordnet, an dem die Schwinge 29 bzw. 30 an ihrem oberen Ende über eine querdurchgehende Lagerachsverschraubung 33, 34- um diese verdrehbar - hängend angelenkt ist. Jede der beiden Schwingen 29, 30 besteht dabei aus wenigstens einer Wange, vorzugsweise aber aus zwei gegebenenfalls durch einen Quersteg miteinander verbundenen Wangen 29/1, 29/2 bzw. 30/1, 30/2, an der seitlich bzw. zwischen deren unteren Enden mittels einer weiteren quer durchgehenden Lagerachsverschraubung 35, 36 ein momentenabstützender Lenker 21, 22 mit seinem entsprechend ausgebildeten Ende (Lagerauge 21/1 bzw. 22/1) angelenkt ist.

Jeder der beiden Längslenker 19, 20 und auch der Diagonal- bzw. Querverbindungsstab 27 ist durch einen stabilen Rundstahl-Stab mit jeweils an seinen beiden Enden angeschmiedetem Befestigungskopf 19/1, 19/2 bzw. 20/1, 20/2 bzw. 27/1, 27/2 gebildet. Die (in Fahrtrichtung vorwärts gemäß Pfeil 28 gesehen) vor dem Achskörper 2 gelegene vordere Anlenkung 23, 24 jedes der beiden Längslenker 19, 20 ist mittels eines stabilen, am zugehörigen Rahmenlängsträger 11 bzw. 12 des Fahrzeugs befestigten (angeschweißten oder angeschraubten), nach unten abragenden Lagerbock 37, 38 bewerkstelligt, an dem der jeweilige Längslenker 19, 20 mit seinem vorderen Ende seitengeführt angelenkt ist. Bei einem einwangigen Lagerbock 37, 38 erfolgt diese Anlenkung von einer Seite her, bei einem zweiwangigen Lagerbock 37, 38 dagegen zwischen beiden Wangen 37/1, 37/2 bzw. 38/1, 38/2 eingepaßt jeweils über eine querdurchgehende Lagerachsverschraubung 39, 40.

Der Diagonal- oder Querverbindungsstab 27 ist über seine beiden Endköpfe 27/1, 27/2 mitden beiden Längslenkern 19, 20 verbunden.

Die hintere Anlenkung bzw. Befestigung der Längslenker 19, 20 und die vordere Befestigung der Lenker 21, 22 erfolgt jeweils vorzugsweise am achskörperseitigen Lagerbock 5 bzw. 6, der hierfür entsprechend ausgebildet ist. Hierzu ist an jedem der beiden Lagerböcke 5, 6 ein innenseitiger Vorsprung mit einer vertikalen Anlagefläche 41, 42 gegeben, an der ein momentenabstützender Lenker 21 bzw. 22 mit seinem vorderen Ende mittels wenigstens zweier voneinander beabstandeter Verschraubungen 43, 44 bzw. 45, 46 lagefixiert festgespannt ist. Ferner sind an der Vorderseite 47, 48 jedes Lagerbockes 5, 6 Vorkehrungen für einen Anschluß eines Längslenkers 19, 20 mit dessen hinterem Ende gegeben. Hierzu ist die Vorderseite 47, 48 eines jeden Lagerbockes 5, 6 mit in einer Vertikalquerebene liegenden Anlageflächen versehen, an denen die Längslenker 19, 20 über endseitige Anschlußplatten 49, 50 und zugehörige Verschraubungen 51, 52 bzw. 53, 54 lagefixiert festgespannt sind.

## Patentansprüche

1. Luftgefederte, lenkbare Räder (3, 4) tragende Achse eines Kraftfahrzeuges, insbesondere Niederflurbusses, mit einem Achskörper (2) und Luftfedern (7, 8) zwischen diesem und Rahmenlängsträgern (11, 12), ferner mit
- je Achsseite einem am Achskörper (2) angschlossenen, diesen vorn überragenden Längslenker (19, 20) zur Längsführung der Achse (1), und
- je Achsseite einem am Achskörper (2) lagefixiert befestigten, diesen hinten überragenden Lenker (21, 22) nur zur Momentenabstützung der Achse (1) und
- einer vorderen rahmenfesten, seitenführenden Anlenkung (23, 24) je Längslenker (19, 20), und
- einer hinteren, zur reinen Vertikalkraftaufnahme aus der Momentenabstützung dienenden fliegenden Aufhängung der momentenabstützenden-Lenker (21, 22), und
- einem Diagonal- oder Querverbindungsstab (27) zwischen beiden Längslenkern (19, 20) zur Querführung der Achse (1),
dadurch gekennzeichnet, daß der Achskörper (2) torsionsweich ausgebildet ist, und daß für die beiden momentenabstützenden Lenker (21, 22) auf jeder Rahmenseite eine hintere, zur reinen Vertikalkraftaufnahme aus der Momentenabstützung dienende längsweiche Anlenkung (25, 26) am Rahmen (11, 12) vorgesehen ist.

2. Achse nach Anspruch 1, dadurch gekennzeichnet, daß der Achskörper (2) im Sinne einer gekröpften Faustachse ausgebildet ist.

3. Achse nach Anspruch 1, dadurch gekennzeichnet, daß die momentenabstützenden Lenker (21, 22) durch jeweils ein Hoch-Längsfederblatt gebildet sind, das an seinem hinteren Ende um 90° verschränkt und mit einem durch Rollen oder Biegen erzeugten Lagerauge (21/1, 22/1) versehen ist.

4. Achse nach Anspruch 1, dadurch gekennzeichnet, daß die hintere, längsweiche und vertikalkraftaufnehmende Anlenkung (25, 26) jedes momentenabstützenden Lenkers (21, 22) über eine an einem Rahmenlängsträger (11, 12) des Fahrzeugs hängend angelenkte Schwinge (29, 30) bewerkstelligt ist.

5. Achse nach Anspruch 4, dadurch gekennzeichnet, daß jede der beiden Schwingen (29, 30) an ihrem oberen Ende an einem Lagerbock (31, 32) über eine quer durchgehende Lagerachsverschraubung (33, 34) - um dieseschwenkbar - hängend angelenkt und der besagte Lagerbock (31, 32) nach unten abragend fest - angeschraubt oder angeschweißt - am Rahmenlängsträger (11, 12) angeordnet ist.

6. Achse nach Anspruch 4, dadurch gekennzeichnet, daß jede der beiden Schwingen (29,30) aus wenigstens einer, vorzugsweise aber aus zwei gegebenenfalls durch einen Quersteg miteinander verbundenen Wangen (29/1, 29/2, 30/1, 30/2) besteht, an der seitlich bzw. zwischen deren unteren Enden eingepaßt mittels einer weiteren quer durchgehenden Lagerachsverschraubung (35, 36) ein momentenabstützender Lenker (21, 22) mit seinem entsprechend ausgebildeten hinteren Ende angelenkt ist.

7. Achse nach Anspruch 1, dadurch gekennzeichnet, daß jeder Längslenker (19, 20) und auch der Diagonal- bzw. Querverbindungsstab (27) durch einen stabilen Rundstahl-Stab mit jeweils an beiden Enden angeschmiedetem Befestigungskopf (19/1, 19/2; 20/1, 20/2; 27/1, 27/2) gebildet ist.

8. Achse nach Anspruch 1, dadurch gekennzeichnet, daß die vordere Anlenkung (23, 24) jedes Längslenkers (19, 20) über einen stabilen, an einem Rahmenlängsträger (11, 12) befestigten - angeschweißten oder angeschraubten-, nach unten abragenden Lagerbock (37, 38) bewerkstelligt ist, an dem der jeweilige Längslenker (19, 20) mit seinem vorderen Ende seitengeführt festgelegt ist.

9. Achse nach den Ansprüchen 3 und 7, wobei der Achskörper (2) oben zwei -je Achsseite einen - Lagerböcke (5, 6) aufweist, auf deren oberem Plateau je eine andernendes rahmenfest abgestützte Luftfeder (7, 8) befestigt ist, dadurch gekennzeichnet, daß jeder der beiden Lagerböcke (5, 6) für die Anlenkung des hinteren Endes eines Längslenkers (19, 20) und des vorderen Endes eines momentenabstützenden Lenkers (21, 22) ausgebildet ist.

10. Achse nach Anspruch 9, dadurch gekennzeichnet, daß an jedem Lagerbock (5, 6) ein innenseitiger Vorsprung mit einer vertikalen Anlagefläche (41, 42) gegeben ist, an der ein momentenabstützender Lenker (21, 22) mit seinem vorderen Ende mittels wenigstens zweier voneinander beabstandeter Verschraubungen (43, 44, 45, 46) lagefixiert festgespannt ist.

11. Achse nach Anspruch 9, dadurch gekennzeichnet, daß an der Vorderseite jedes Lagerbockes (5, 6) Vorkehrungen für einen Anschluß des hinteren Endes eines Längslenkers (19, 20) gegeben sind.

12. Achse nach Anspruch 1, dadurch gekennzeichnet, daß beide Längslenker (19, 20), der Diagonal- bzw. Querverbindungsstab (27) und die beiden momentenabstüzenden Lenker (21, 22) in der selben Fahrzeugquerebene angeordnet sind.

## Claims

1. Axle of a motor vehicle, particularly a low-floor bus, with air-sprung, steered wheels (3, 4), an axle beam (2) and air springs (7, 8) between said axle beam and the frame longitudinal members (11, 12), and, in addition, with
• one longitudinal arm (19, 20) attached to end of the axle beam for the longitudinal location of the axle (1), and projecting beyond it at the front, and
• one arm (21, 22) fastened to each end of the axle beam only for the moment support of the axle (1), projecting beyond it at the rear, and
• a front-mounted, laterally guiding location element (23, 24) for each longitudinal arm (19, 20), which location element (23, 24) is firmly attached to the frame, and
• a rear-mounted floating suspension for the moment-supporting arms (21, 22), which suspension absorbs only the vertical forces from the moment support, and
• a diagonal or transverse connecting rod (27) between the two longitudinal arms (19, 20) for the transverse location of the axle (1),
characterised in that the axle beam (2) is designed to yield to torsion and that for the two moment-supporting arms (21, 22) on each frame side a rear location element (25, 26) on the frame (11, 12) is provided, which location element (25, 26) yields in longitudinal direction and absorbs only the vertical forces from the moment support.

2. Axle according to Claim 1, characterised in that the axle beam (2) is designed as a dropped stub axle.

3. Axle according to Claim 1, characterised in that each moment-supporting arm (21, 22) is formed by means of a vertical-longitudinal spring leaf twisted at its rear end by 90° and provided with a bearing eye (21/1, 22/1) produced by means of rolling or bending.

4. Axle according to Claim 1, characterised in that the rear location element (25, 26) of each moment-supporting arm (21, 22), yields in longitudinal direction, absorbs vertical forces and is achieved via a rocker (29, 30) located in a suspended manner at the frame longitudinal member (11, 12) of the vehicle.

5. Axle according to Claim 4, characterised in that each of the two rockers (29, 30) is located at its upper end on a bearing bracket (31, 32) in a suspended manner via a bearing-shaft screwed connection (33, 34) which is continuous in transverse direction, that each of said rockers (29, 30) can be slewed round said bearing-shaft screwed connection (33, 34) and that said bearing bracket (31, 32) points downwards and is firmly bolted or welded on to the frame longitudinal member (11, 12).

6. Axle according to Claim 4, characterised in that each of the two rockers (29, 30) consists of at least one, but preferably of two walls (29/1, 29/2 and 30/1, 30/2) which if necessary are interconnected by means of a transverse web, a moment-supporting arm (21, 22) with its correspondingly formed rear end being laterally located at said wall or fitted in between the lower ends of said walls by means of another bearing-shaft screwed connection (35, 36) which is continuous in transverse direction.

7. Axle according to Claim 1, characterised in that each longitudinal arm (19, 20) and also the diagonal or transverse connecting rods (27) are designed as stable circular-section steel rods provided at both ends with a forged-on mounting head (19/1, 19/2, 20/1, 20/2; 27/1, 27/2).

8. Axle according to Claim 1, characterised in that the front location element (23, 24) of each longitudinal arm (19, 20) is achieved by means of a stable, downward-pointing bearing bracket (37, 38) welded or bolted on to a frame longitudinal member (11, 12), the respective longitudinal arm (19, 20) with its front end being fastened to and laterally guided at said bearing bracket (37, 38).

9. Axle according to the Claims 3 and 7, whereby the axle beam (2) is provided at the top with two bearing brackets (5, 6) - one bracket at each end of the axles -, on whose upper plateau an air spring (7, 8) is fitted whose other end is firmly supported on the frame, characterised in that each of the two bearing brackets (5, 6) is designed for the location of the rear end of one longitudinal arm (19, 20) and of the front end of one moment-supporting arm (21, 22).

10. Axle according to Claim 9, characterised in that each bearing bracket (5, 6) has a projection on the inside with a vertical contact face (41, 42), to which a moment-supporting arm (21, 22) is firmly clamped in a fixed position by means of at least two screwed connections (43, 44, 45, 46) arranged at a distance to each other.

11. Axle according to Claim 9, characterised in that, the front side of each bearing bracket (5, 6) is fitted with provisions for connecting up the rear end of one longitudinal arm (19, 20).

12. Axle according to Claim 1, characterised in that both longitudinal arms (19, 20), the diagonal or transverse connecting rod (27) and the two moment-supporting arms (21, 22) are arranged in the same transverse plane in the vehicle.

## Revendications

1. Essieu de véhicule automobile portant des roues directrices (3, 4) à suspension pneumatique, notamment autobus à plancher surbaissé, comprenant un corps d'essieu et des ressorts pneumatiques (7, 8) placés entre le corps d'essieu et les longerons (11, 12) du châssis ainsi que,
- de chaque côté de l'essieu, un bras longitudinal (19, 20) relié au corps d'essieu (2) et dépassant celui-ci vers l'avant pour le guidage longitudinal de l'essieu (1) et,
- de chaque côté de l'essieu, un bras (21, 22) fixé au corps d'essieu (2) pour en bloquer la position, et le dépassant vers l'arrière pour servir d'appui de couple à l'essieu (1) et,
- une articulation (23, 24) de guidage latéral, solidaire du châssis pour chaque bras longitudinal (19, 20) et,
- une suspension flottante, arrière, servant uniquement à recevoir les efforts verticaux de l'appui de couple pour les bras d'appui de couple (21, 22) et,
- une barre de liaison diagonale ou transversale (27) entre les deux bras longitudinaux (19, 20) pour le guidage transversal de l'essieu (1),
caractérisé en ce que
le corps d'essieu (2) est souple en torsion et pour les deux bras (21, 22) d'appui de couple, sur chaque partie de châssis, il y a une articulation (25, 26) arrière, souple longitudinalement, servant seulement à recevoir les efforts verticaux de l'appui de couple pour le châssis (11, 12).

2. Essieu selon la revendication 1,
caractérisé en ce que
le corps d'essieu (2) est réalisé dans le sens d'un essieu à chapes fermées.

3. Essieu selon la revendication 1,
caractérisé en ce que
les bras d'appui de couple (21, 22) sont formés chaque fois par une lame de ressort disposée sur chant, dont l'extrémité arrière est recourbée à 90° et comporte un oeillet de palier (21/1, 22/1) obtenu par roulage ou cintrage.

4. Essieu selon la revendication 1,
caractérisé en ce que
l'articulation (25, 26) arrière, souple longitudinalement et recevant les forces verticales de chaque bras (21, 22) d'appui de couple est réalisée par l'intermédiaire d'une bielle (29, 30) articulée de manière suspendue à l'un des longerons (11, 12) du châssis.

5. Essieu selon la revendication 4,
caractérisé en ce que
chacune des deux bielles (29, 30) est reliée par son extrémité supérieure à un bloc de palier (31, 32) par une vis d'axe traversant (33, 34) en étant articulée de manière suspendue à celui-ci (pivotant) et le bloc de palier (31, 32) est monté solidaire du longeron (11, 12) du châssis en venant en saillie vers le bas, de manière solidaire (par vissage ou soudage).

6. Essieu selon la revendication 4,
caractérisé en ce que
chacune des deux bielles (29, 30) est formée d'au moins une et de préférence également deux joues (29/1, 29/2 ; 30/1, 30/2) également reliées par une traverse, et auxquelles est articulée l'extrémité arrière de forme appropriée d'un bras d'appui de couple (21, 22), adapté latéralement ou entre les deux extrémités des joues, avec une vis formant axe de palier (35, 36), traversant, pour un bras d'appui de couple (21, 22).

7. Essieu selon la revendication 1,
caractérisé en ce que
chacun des bras longitudinaux (19, 20) ainsi que la barre de liaison diagonale ou transversale (27) sont des fers ronds, solides, dont les deux extrémités sont chaque fois munies d'une tête de fixation (19/1, 19/2 ; 20/1, 20/2 ; 27/1, 27/2) forgée.

8. Essieu selon la revendication 41,
caractérisé en ce que
l'articulation avant (23, 24) de chaque bras longitudinal (19, 20) est réalisée par un bloc de palier (27, 28) solide, fixé à l'un des longerons (11, 12) (soudés ou vissés) et venant en saillie vers le bas, bloc auquel est reliée solidairement l'extrémité avant de chaque bras longitudinal (19, 20) en étant guidé latéralement.

9. Essieu selon l'une des revendications 3 et 7 dont le corps d'essieu (2) comporte deux blocs de palier (5, 6), en haut, de chaque côté, et dont le plateau inférieur porte solidairement un ressort pneumatique (7, 8) s'appuyant par ailleurs solidairement au châssis,
caractérisé en ce que
chacun des deux blocs de palier (5, 6) est réalisé pour l'articulation de l'extrémité arrière d'une articulation longitudinale (19, 20) et de l'extrémité avant d'un bras d'appui de couple (21, 22).

10. Essieu selon la revendication 9,
caractérisé en ce que
chaque bloc de palier (5, 6) comporte une saillie intérieure avec une surface d'appui verticale (41, 42) contre laquelle vient l'extrémité avant d'un bras d'appui de couple (21, 22) fixée par au moins deux liaisons à vis (43, 44, 45, 46) de position déterminée, ces vis étant écartées l'une de l'autre.

11. Essieu selon la revendication 9,
caractérisé en ce que
sur la face avant de chaque bloc de palier (5, 6) il y a des moyens pour raccorder l'extrémité arrière d'un bras longitudinal (19, 20).

12. Essieu selon la revendication 1,
caractérisé en ce que
les deux bras (19, 20) de la barre de liaison diagonale et transversale (27) et les deux bras d'appui de couple (21, 22) sont situés dans le même plan transversal du véhicule.
